# EUROPEAN PATENT APPLICATION

(11) **EP 4 311 655 A1**
(43) Date of publication of application: **31.01.2024**
(21) Application number: 22186705.4
(22) Date of filing: 25.07.2022
(51) Int. Cl.: B29C 64/118, B29C 64/393, B33Y 10/00, B33Y 30/00, B33Y 50/02

(54) **METHOD FOR PRODUCING HIGHLY DECORATIVE LUMINAIRES**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

The invention provides a method for producing a 3D item (1) comprising a plurality of layers (322) of 3D printed material (202) by means of fused deposition modelling, the method comprising a 3D printing stage comprising layer-wise depositing 3D printable material (201), including 3D printing of a second layer (3222) on a top face (371) of a first layer (3221), to provide the 3D item (1); comprising temporarily adapting one or more of (i) an extrusion rate v_{E}, (ii) a printing speed v_{P}, and (iii) a printing temperature T_{N} to provide a locally increased layer width (W1) of the second layer (3222) thereby providing a protruding layer part (1320) having a protrusion height (HI); wherein the protruding layer part (1320) is associated to the second layer (3222) and at least partly covers a side face (3231) of the first layer (3221).

## Description

### FIELD OF THE INVENTION

The invention relates to a method for manufacturing a 3D (printed) item. The invention also relates to the 3D (printed) item obtainable with such method. Further, the invention relates to a lighting device including such 3D (printed) item.

### BACKGROUND OF THE INVENTION

The 3D printing articles including spatially different properties is known in the art. US2018/0093412, for instance, describes a method of printing a 3D article comprising selectively depositing a first portion of build material in a fluid state onto a substrate to form a first region of build material; selectively depositing a first portion of support material in a fluid state to form a first region of support material; and selectively depositing a second portion of build material in a fluid state to form a second region of build material, wherein the first region of support material is disposed between the first region of build material and the second region of build material in a z-direction of the article. In some cases, the first region of support material forms a grayscale pattern and/or a CMY color pattern in combination with the first region of build material and/or the second region of build material.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

There is desire to control shapes of 3D printed items, e.g. for optical properties, for tactile properties, for mechanical properties, etc. However, current methods do not provide such options or only in a limited way. Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Hence, in a first aspect the invention provides a method for producing a 3D item comprising a plurality of layers of 3D printed material by means of fused deposition modelling. Especially, the method may comprise (a 3D printing stage comprising) layer-wise depositing (on a receiver item an extrudate comprising) 3D printable material, including 3D printing of a second layer on a top face of a first layer to provide the 3D item. The method may further comprise temporarily adapting (during the 3D printing stage comprising) one or more of (i) an extrusion rate v_{E}, (ii) a printing speed v_{P}, and (iii) a printing temperature T_{N}, especially to provide a locally increased layer width (W1) of the second layer thereby providing a protruding layer part having a protrusion height (HI). Especially, the protruding layer part (or "droplet" or "droplet structure") may be associated to the second layer and at least partly covers a side face of the first layer. Hence, in specific embodiments, the invention may provide a method for producing a 3D item comprising a plurality of layers of 3D printed material by means of fused deposition modelling, the method comprising (a 3D printing stage comprising) layer-wise depositing (on a receiver item an extrudate comprising) 3D printable material, including 3D printing of a second layer on a top face of a first layer, to provide the 3D item; the method comprising temporarily adapting (during the 3D printing stage comprising) one or more of (i) an extrusion rate v_{E}, (ii) a printing speed v_{P}, and (iii) a printing temperature T_{N} to provide a locally increased layer width (W1) of the second layer thereby providing a protruding layer part having a protrusion height (HI); wherein the protruding layer part is associated to the second layer and at least partly covers a side face of the first layer.

With such a method, it may be possible to achieve a shaped 3D items, such as e.g. lighting fixtures to house the lighting device. Further, with such a method, it may be possible to provide 3D printed items that may have a plurality of materials with advantageous properties. For instance, the 3D item generated using such a method may use suitable 3D printable materials that are structurally strong, making them suitable to support and house components of a system. This may be particularly useful in positioning the components within said system, for example, a lighting system. Further, the 3D item generated using such a method may also have different 3D printed material(s) that may provide optical benefits such as being transmissive for visible light or light of specific wavelengths. Hence, the method may provide the advantage of generating a 3D item by fused deposition modeling that may be structurally strong and have optically beneficial properties. Further, the invention provides a further solution in creating tailor made shapes, which may e.g. advantageous properties in terms of texture control, absorption control, reflection control, strength control, etc.

As indicated above, the method may comprise depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. In embodiments, the 3D printable material may be printed as a filament and deposited as such. The 3D printable material may be provided as filament or may be formed into a filament. Hence, whatever starting materials are applied, a filament comprising 3D printable material may be provided by the printer head and 3D printed. The term "extrudate" may be used to define the 3D printable material downstream of the printer head, but not yet deposited. The latter may be indicated as "3D printed material". In fact, the extrudate may be considered to comprises 3D printable material, as the material is not yet deposited. Upon deposition of the 3D printable material or extrudate, the material may thus be indicated as 3D printed material. Essentially, the materials may be the same material, as the thermoplastic material upstream of the printer head, downstream of the printer head, and when deposited, may essentially be the same material(s).

Herein, the term "3D printable material" may also be indicated as "printable material". The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

As mentioned above, the invention may provide a method for producing a 3D item comprising a plurality of layers of 3D printed material by means of fused deposition modelling. In embodiments, the method may comprise a 3D printing stage further comprising layer-wise depositing on a receiver item an extrudate comprising 3D printable material. Especially, the 3D printable material may be deposited on a receiver item. The receiver item may be an item that may support the 3D printable material on it such that another item may be formed by further layer-wise deposition of 3D printable material. The receiver item in embodiments may be objects such as a lamp shade, window blinds, spotlights, flashlights, wall hangings, desk lamps, etc. Further, in embodiments, the receiver item may (also) be a 3D item that is formed by the layer-wise deposition of 3D printable material.

The plurality of layers of 3D printable material that may be deposited on the receiver item may comprise the first layer of 3D printed material. Especially, the method may include 3D printing of a second layer on the first layer to provide the 3D item. Especially, the second 3D printed layer may be provided on a top face of the first 3D printed layer Here, the top face may refer to face on the first layer on the upper side of the first layer. Especially, 3D printing of a second layer on the top face of the first layer may facilitate flowing of part of the 3D printable material on the surface of the first layer.

The top face may be flattened. However, the top face may also be curved. In general, the top face may be flattened due to a nozzle movement executing some pressure on the just 3D printed material (see also below).

The terms "first 3D printed layer" and "second 3D printed layer" especially refer to two layer of which one is configured on the other. This does not necessarily apply to the first 3D printed layer deposited on the receiver item but may essentially refer to any set of two layers of which one was deposited (on the top face) of the other. Hence, a second 3D printed layer may also be a first 3D printed layer for yet another (second) 3D printed layer. In embodiments, the 3D printed item comprises a plurality of sets of each a first layer and a second layer. Such sets are not necessarily identical in shape and/or dimensions.

In embodiments, the method may comprise temporarily adapting during the 3D printing stage the extrusion rate v_{E}. The extrusion rate refers to the rate at which the 3D printable material is extruded from the nozzle ("printer nozzle"). An increase in the extrusion rate may increase the volume of 3D printable material deposited. This may increase the thickness of the deposited layer. Hence, when during 3D printing the extrusion rate is increased relative to the printing speed, a layer may get a larger layer width. Likewise, when during 3D printing the extrusion rate is decreased relative to the printing speed, a layer may get a smaller layer width. In the former embodiment, as the 3D printable material is flowing when extruded from the printer nozzle, part of the 3D printable material may "spillover" an earlier printed layer (on which the 3D printable material is deposited with a relatively higher extrusion rate). This may lead to the herein described protruding layer part. In embodiments, the protruding layer part may especially be shaped like a droplet shape, e.g. with a bulbous shape with higher amount of 3D printable material at lower part of the protruding layer part and a narrow or pointy upper part.

Further, in embodiments, the method may comprise temporarily adapting the printing speed v_{P}. At a constant extrusion rate, the volume of 3D printable material deposited may be increased by lowering printing speed i.e. the speed at which the nozzle traverses relative to a receiver item. Hence, more 3D printable material may be deposited for every pass of the nozzle. Hence, when during the during 3D printing the printing speed is reduced while maintaining the extrusion rate constant, the layer may get a larger width. Likewise, when during the during 3D printing the printing speed is increased while maintaining the extrusion rate constant, the layer may get a smaller width. In the former embodiment, as the 3D printable material is flowing when extruded from the printer nozzle, part of the 3D printable material may "spillover" an earlier printed layer (on which the 3D printable material is deposited at a relatively lower printing speed). This may lead to the herein described protruding layer part.

Yet further, in embodiments, the method may comprise temporarily adapting the printing temperature T_{N}. Especially, T_{N} ≥ Tp+100 °C. Here, Tp is the phase transition temperature. The 3D printable material may be deposited at a high temperature such as higher than the phase transition temperature. Upon cooling, the 3D printable material may cool to a temperature lower than the phase transition temperature resulting in the solidification of the 3D printable material (or 3D printed material). Hence, in this way the 3D printed material may be provided when the 3D printable material cools to a temperature lower than the phase transition temperature. Especially, the phase transition temperature T_{P} may be the melting temperature Tₘ, such as when the 3D printable material comprises a semicrystalline polymer material. Further, especially, the phase transition temperature Tp may be the glass transition temperature T_{g} such as when the 3D printable material comprises an amorphous polymer material. In specific embodiments, the phase transition temperature Tp may be the melting temperature Tₘ.

The viscosity of the 3D printable material may be dependent on the temperature at which the 3D printable material is extruded from the nozzle. The viscosity of the 3D printable material may be decreased by increasing the printing temperature T_{N}. When increasing the temperature, the 3D printable material may become more flowable. Hence, when during the 3D printing the nozzle temperature is increased while not changing the printing speed or not substantially changing the deposition rate, at least part of the 3D printable material (or 3D printed material) may spillover on an earlier printed layer (on which the 3D printable material is deposited at a relatively higher nozzle temperature). A higher nozzle temperature may also allow a higher extrusion rate. For comments about the extrusion rate, see also above.

The flow rate of the 3D printable material may be 5-100 cm³/10 min, such as 10-90 cm³/10 min , especially 20-80 cm³/10 min (e.g. as defined according to ISO 1133 12). Such mass flow rates may, especially, be achieved by selecting the printing temperature T_{N} of at least 300 °C, such as 350 °C, especially 400 °C. Further, in embodiments, the 3D printable material may be deposited and hence, the extrusion of 3D printable material may (also) be described in terms of deposition of 3D printable material. Especially, the 3D printable material may be deposited at a rate of 2.5 - 15000 mg/s, such as 10 - 12000 mg/s, especially 1000 - 10000 mg/s. Hence, during at least part of the 3D printing stage, the flow rate of the 3D printable material may be selected from the range 5-100 cm³/10 min. Alternatively or additionally, during at least part of the 3D printing stage, the deposition rate of the 3D printable material may be selected from the range of 2.5 - 15000 mg/s.

Hence, in embodiments, the method may comprise temporarily adapting during the 3D printing stage comprising one or more of (i) an extrusion rate v_{E}, (ii) a printing speed v_{P}, and (iii) a printing temperature T_{N}. Consequently, by altering one or more of the aforementioned parameters, an excessive volume of 3D printable material may be deposited, and therefore provide a locally increased layer width (W1) of the second layer thereby providing a protruding layer part (associated to the second layer) having a protrusion height (HI). The protruding layer part may thus lead to an increased layer width, relative to one or more other layer parts of the same layer which was/were 3D printed under other 3D printing conditions. Hence, in embodiments, the protruding layer part may (also) have a protrusion height (HI). The protruding layer part may be the solidified result of some of the 3D printable material flowing down a previously printed layer (or (even) flowing down previously printed layers).

The phrase "one or more of (i) an extrusion rate v_{E}, (ii) a printing speed v_{P}, and (iii) a printing temperature T_{N}", and similar phrases, especially refers to the temporarily adapting the printing conditions while printing the second layer (on the first layer). In embodiments, this temporarily adapting can be during a part of the time printing the second layer. In other embodiments, this can be during the entire time printing the second layer. Then the entire second layer may "bulge" over at least part of the first layer.

In embodiments, the protruding layer part may be associated with the second layer, especially meaning that the protruding layer part may be in part of the second layer or may be comprised by the second layer, but may also extend therefrom. Hence, the term associated may (also) refer to the protruding layer part being in contact with the second layer i.e. the protruding layer part in embodiments may be deposited separate from the remainder of the second layer but may however be deposited such that it contacts one or more faces of the second layer. Especially, however, the protruding layer part is printed during the part of the stage wherein the second layer is printed. As indicated above, the protruding layer part may have a protrusion height (HI).

In a further aspect, the invention provides a method for producing a 3D item comprising a plurality of layers of 3D printed material by means of fused deposition modelling, the method comprising (a 3D printing stage comprising) layer-wise depositing (on a receiver item an extrudate comprising) 3D printable material, including 3D printing of a second layer on a first layer, to provide the 3D item; comprising temporarily adapting (during the 3D printing stage comprising) one or more of (i) an extrusion rate v_{E}, (ii) a printing speed v_{P}, and (iii) a printing temperature T_{N} to provide a protruding layer part associated to the second layer and at least partly covering a side face of the first layer.

In embodiments, the protruding layer part of the second layer at least partly covering a side face of a previously deposited first layer may be provided by selecting (i) a printing temperature, and (ii) a material viscosity. Further, by selecting a size of the protruding part may result in the protruding layer part of the second layer at least partly covering the side face of a previously deposited first layer.

In general, the higher the increase in extrusion rate, the larger the locally increased layer width may be and/or the larger the protrusion height may be. Further, in general, the higher the reduction in printing speed, the larger the locally increased layer width may be and/or the larger the protrusion height may be. Yet further, in general, the larger the increase in nozzle temperature, the larger the protrusion height may be and (optionally) the larger the locally increased layer width may be.

The 3D printed item may comprise one or more protrusions at one side of the second layer (and the first layer). Alternatively or additionally, the 3D printed item may comprise one or more protrusions at the other side of the second layer (and the first layer). Hence, in specific embodiments the 3D printed item may comprise two or more protrusions at both sides of the second layer (and the first layer). Herein, however, especially embodiments are described comprising one or more protrusions at one side of the second layer (and the first layer) (and not at both sides).

Hence, especially the printing conditions may thus be chosen such that a protruding layer part (associated to the second layer), providing a locally increased layer width (W1) of the second layer and the protruding layer part having a protrusion height (HI).

Hence, in embodiments the thickness and the width of the protruding layer part may be increased i.e. regions lower in the protruding layer part may be larger (thicker and wider) as the 3D printable material (comprised by the protruding layer part) is flowed over the first layer. Especially, the 3D printable material may exhibit fluid like properties in dependence of the temperature of the 3D printable material. On cooling, the 3D printable material becomes less viscous and may adhere to side face of the first layer. As a result of flowing the 3D printable material (as described here) amorphous drip-like shaped protruding layer parts may be achieved on the side face of the first layer. Hence, the protruding layer part may be associated to the second layer and at least partly cover a side face. Hence, the second layer and the protruding layer part may be associated to the second layer and may (together) at least partly cover a side face and the top face of the first layer.

Herein, the term "top face" may especially refer to a face on the upper side of a 3D printed layer, and the side face may refer to the one or more lateral faces of such 3D printed layer. In embodiments, the top face and/or the side face may be curved, or flat. In embodiments, the top face and the side face may be provided at an angle i.e. the faces may meet at angle. Further, in embodiments, where the top face and the side face are curved, there may (even) be a smooth transition from the top face to the side face such that the interface of the top face and the side face is indistinguishable. Especially, the top face may be flattened. Further, such 3D printed layer may comprise a bottom face. A distance between the bottom face and the top face may be the layer height. The bottom face of the second layer may be in contact with the top face of the first layer.

In embodiments, the protruding layer part may have a hairpin bend (or "hairpin turn") structure. A hairpin bend in the protruding layer part may be a bend with a very acute inner angle i.e. the protruding layer part may be a layer part comprising 3D printable material that is folded over itself. To achieve this, in embodiments, the method may comprise moving the nozzle back and forth such that the deposited 3D printable material (that may be extruded as a strand or filament) may fold over itself, hence, forming a hairpin bend. On solidification, 3D printed material with a hairpin bend structure may be provided. Especially, the hairpin bend may be provided by flowing the 3D printable material and hence, the hairpin bend may also have a droplet shape. The length, the height and width of the protruding layer part may, in embodiments, be controlled by adapting the extrusion rate _{VE}, printing speed _{VP} and printing temperature T_{N}. Further, in embodiments, the diameter of the deposited strand of 3D printable material (comprised by the protruding layer part) may (also) be controlled by adapting the extrusion rate _{VE}, printing speed _{VP} and printing temperature T_{N}. Hence, by adapting the extrusion rate _{VE}, printing speed _{VP}, and printing temperature T_{N}, a multitude of different shapes (of the protruding layer part) may be provided.

In embodiments, the method may comprise 3D printing layers along parallel printing paths (Aₚ) to provide a stack. That is, the 3D printable material may be deposited by extruding said material through a nozzle along a line. The subsequent layers are deposited in a similar way above the preceding layer. Hence, forming a stack of 3D printable material. Consequently, the 3D item generated using such method may comprise a stack comprising parallel layers of 3D printed material. In embodiments, the number of layers in the stack may be at least 10, such as at least 20, such at least 50. Hence, in embodiments, the method may comprise 3D printing layers along parallel printing paths (Aₚ) to provide a stack comprising a plurality of the layers. Note that the printing paths may be straight or may include one or more curves.

Especially, the method may further comprise generating (i) along a connection line configured within the stack and (ii) (the connection line) configured perpendicular to the printing paths (Aₚ) of the layers of the stack, one in n layers of such protruding layer part. Especially, the n layers of the protruding layer part may be generated such that n≥5, such as n≥15, especially n≥25, especially n≥50. Hence, a stack of 50 layers may e.g. comprise 1-10 protruding layers parts. Hence, in a specific embodiment, the method may comprise 3D printing layers along parallel printing paths (Aₚ) to provide a stack comprising a plurality of the layers; wherein the method further comprises generating along a connection line configured within the stack and configured perpendicular to the printing paths (Aₚ) of the layers of the stack, one in n layers of such protruding layer part, wherein n≥5.

Note that at about the connection line the direction of motion of the nozzle may be altered i.e. the nozzle may be moved in a direction perpendicular to the printing paths (A_{P}), such as to generate a hairpin bend. However, as indicated above, temporarily adapting during the 3D printing stage at about such connection line one or more of (i) an extrusion rate v_{E}, (ii) a printing speed v_{P}, and (iii) a printing temperature T_{N}, may provide the protruding layer part. Hence, in embodiments, the protruding layer part may be flowed down at least part of the first layer in a direction perpendicular to the printing paths (A_{P}).

Further, in embodiments, in a vertical direction i.e. perpendicular to the printing paths (Aₚ) of the layers of the stack, the protruding layer parts may (thus) be provided such that each protruding layer part is in contact with the preceding protruding layer part. Alternatively, in embodiments, the protruding layer parts may also be spaced apart in a direction perpendicular to the printing paths (Aₚ) of the layers of the stack, such that each of the protruding layer parts is not in contact with the preceding protruding layer part. In further embodiments, the position of the protruding layer parts may (also) be staggered, wherein the protruding layer part may be provided a distance (D_{AP}) apart from the preceding protruding layer part along the direction of the printing path (A_{P}).

As mentioned before, in embodiments, the length of the protruding layer part may be increased by increasing the extrusion rate, or lowering the printing speed, or increasing the printing temperature, or a combination thereof. Hence, in embodiments, the method may comprise (while 3D printing the second layer) (i) temporarily increasing the extrusion rate v_{E} with at least 50%, such as at least 100%, such as at least 200%, such as at least 300%. Alternatively or additionally, in embodiments, the method may comprise (while 3D printing the second layer) (ii) temporarily reducing the printing speed v_{P} with at least 50%, such as 65%, such as 80%. Hence, in embodiments, the printing speed v_{P} may be configured in the range 0.5-30 cm/s, especially 1-20 cm/s, such as 5-10 cm/s. Yet, alternatively or additionally, in embodiments the method may comprise (while 3D printing the second layer) (iii) temporarily increasing the printing temperature T_{N} with at least 20 °C, such as 40 °C, especially 60 °C to provide the protruding layer part. Hence, in a specific embodiment, the method may comprise, while 3D printing the second layer, (i) temporarily increasing the extrusion rate v_{E} with at least 100%, especially at least 200% or at least 300% and/or (ii) temporarily reducing the printing speed v_{P} with at least 50%, especially at least 80% or at least 90%, and/or (iii) temporarily increasing the printing temperature T_{N} with at least 20 °C.

In embodiments, the method may comprise controlling one or more of the extrusion rate v_{E}, the printing speed v_{P}, and the printing temperature T_{N}, such as to provide the second layer (also) with the layer width (W). Further, the second layer may have a layer length.

The 3D item provided in embodiments may be closed objects i.e. the 3D item may enclose a space within (at least in a cross-section viewed from above the 3D item). Hence, starting from a point on the one or more layers comprised by the 3D item, and travelling along the printing path (A_{P}) will circumnavigate the 3D item to arrive at the starting point. Note that here, the printing path (A_{P}), may have a varied trajectory i.e. the printing path (A_{P}) may have rectilinear sections, curved sections, bends, turns, etc. Hence, in embodiments, the layer length (L) of the second layer may be defined as the length of the closed circuit starting and ending from a point on the second layer measured along the printing path (A_{P}). Note that, embodiments of the 3D item may comprise one or more second layers that do not form a closed loop. In such situations, the layer length (L) may be defined as the layer length measure along the printing path (A_{P}) from the beginning to the end of the second layer. Yet further, the 3D item may have a plurality of shapes and hence, the layer length (L) may vary in dependence of the specific second layer comprised by the 3D item. The width (W) of the second layer may be defined as the extent of the second layer measured in a cross-sectional direction (hen viewed from above) perpendicular to the printing path (A_{P}). Note that, in embodiments, the width of the 3D item may vary along the printing path (A_{P}) of the second layer.

Further, in embodiments, the method may comprise controlling one or more of the extrusion rate v_{E}, the printing speed v_{P}, and the printing temperature T_{N}, such as to provide a locally increased layer width (W1), a layer height (H), and a protrusion height (HI) of the protruding layer part. Especially, W1/W≥1.25, such as W1/W≥1.5, such as W1/W≥1.75, such as W1/W>2 or even W1/ W>2 or W1/W>3. Especially, W1/W≤25, such as W1/W≤10, such as W1/W≤5, such as W1/W<3. Especially, 1.25≤W1/W≤25, such as 1.5≤W1/W≤10, such as 1.75≤W1/W≤5. Further especially, 1.5≤H1/H≤100, such as 2≤H1/H≤50, more especially 2.5≤H1/H≤20, such as 3≤H1/H≤15, such as 3.5≤H1/H≤10.

In embodiments, the second layer may have a width (W) in the range of 1-10 mm, such as 2-8 mm, such as 4-6 mm. Further, in embodiments, the second layer may have a layer height (H) in the range of 0.5-5 mm, such as 1-4 mm, especially 2-3 mm. For example, W may be at least 0.5 mm such as at least 1 mm or 2 mm and/or H may be at least 0.5 mm such as at least 1 mm or 2 mm. The W may be larger than the H.

In embodiments, the protruding layer part may have the locally increased layer width (W1) at least greater than 2 mm, such as at least greater than 3 mm, especially at least greater than 4 mm. Further, in embodiments, the protruding layer part may have the protrusion height (HI) at least greater than 2 mm, such as at least greater than 3 mm, especially at least greater than 4 mm.

Note that, in embodiments, the protruding layer part may be deposited or generated along a connecting line i.e. the protruding layer part may essentially be generated in a direction perpendicular to the printing path (Ap).

The protruding layer part may further comprise a length (L_{L2}). This length is measured along the direction of the printing path (Aₚ) of the associated second layer. Hence, in embodiments the method may comprise controlling one or more of the extrusion rate v_{E}, the printing speed v_{P}, and the printing temperature T_{N}, such as to provide the protruding layer part having a length (L_{L2}). As indicated above, the protruding layer part may be associated to the second layer.

Hence, the second layer may comprise one or more protruding layer parts and one or more other parts, herein also indicated as first parts. The one or more first parts may have the "regular" layer dimensions, whereas the protruding layer part has the specific layer dimensions related to the protrusion. Hence, in embodiments the second layer may comprise (i) a first part having a first length (L_{L1}) and having the layer width (W) and (ii) the protruding layer part having a second length (L_{L2}) and having the increased layer width (W1). The width of the protruding layer part (W1) is the extent of the protruding layer part in a cross-section (e.g. when viewed from above when configured on a receiver item). Especially, the first length (L_{L1}) and second length (L_{L2}) may be selected such that 0≤L_{L1}/L_{L2}≤100, such as 0≤L_{L1}/L_{L2}≤20, such as 0≤L_{L1}/L_{L2}≤10, such as 0≤L_{L1}/L_{L2}≤0.95. Hence, the layer may have a layer length L, wherein L=Σ L_{L1}+ Σ L_{L2}. In specific embodiments, L_{L2}= L_{L1}. In other embodiments, L_{L2}<L_{L1}. In yet other embodiments, L_{L2}>L_{L1}. In specific embodiments, L_{L2}=L. However, in other embodiments L_{L2}<L.

Especially, L_{L1} may be selected such that 0 mm≤L_{L1}≤200 mm, like especially 0 mm≤L_{L1}≤100 mm, such as 0 mm≤L_{L1}≤50 mm, especially 0 mm≤L_{L1}≤20 mm. Especially, however, in embodiments LL1 may e.g. be at least about 1 mm, such as at least about 2 mm. Therefore, in embodiments 1 mm≤L_{L1}≤200 mm, such as 2 mm≤L_{L1}≤100 mm. Hence, in embodiments distances between two protruding layers parts associated to the same second layer may be selected from the range of 1-200 mm, such as selected from the range of 2-100 mm.

Here, L_{L1} may be the length of the space between two protruding layers parts. Hence, the first length L_{L1} of the protruding layer part may be configured in relation to the second length L_{L2}. In embodiments where L_{L1}/L_{L2}=0, there is no spacing between the protruding layer parts, and hence, the protruding layer part may especially form a ring. Further, in embodiments, the spacing between the protruding layer parts may (also) be increased. Especially, in embodiments, the number of protruding layer parts per layer may be m, wherein m≥2, such as m≥5, especially m≥20. Note that in embodiments, some of the second layers may have no associated protruding layer parts i.e. some of the second layers may not comprise the protruding layer part (or droplets).

In further embodiments, one or more of the locally increased layer width (W1) and the protrusion height (HI) may be increased in exclusion of the other dimensions of the protruding layer part. Yet, in embodiments, one or more of the locally increased layer width (W1), the second length (L_{L2}), and the protrusion height (HI) may be increased in exclusion of the other dimensions of the protruding layer part. The height (HI) of the protruding layer part may be the vertical extent of the protruding layer part (e.g. when viewing a lateral projection of the 3D item when configured on a receiver item).

Further, in embodiments, the method may comprise controlling one or more of the extrusion rate _{VE}, the printing speed v_{P}, and the printing temperature T_{N}, such as to provide the protruding layer part with an equivalent circular diameter D_{ec}, defined perpendicular to the increased layer width (W1). As mentioned before, 3D printable material may be flowed during deposition. Hence, the geometry of the protruding layer part may not be purely polygonal. Therefore, the protruding layer part may have an equivalent diameter D_{ec} which corresponds to the diameter of a circle with the same area as a rectangle with height h and width w. Especially, D_{ec} may be selected such, that the following applies: 1.25≤ D_{ec}/W1≤25, such as 1.5≤D_{ec}/W1≤10, such as 1.75≤D_{ec}/W1≤5.

The 3D printable material, and thus the 3D printed material), may in embodiments have properties that vary over the 3D printable material, or the 3D printed material, respectively. Hence, a first part may have a first property and a second part may have a second property. However, in other embodiments, the 3D printable material, and thus the 3D printed material, respectively, may essentially the same. Hence, different parts may essentially have the same material and the same properties. Here below, some properties are described.

In embodiments, the 3D printable material may be transmissive for visible light. The term "visible light" especially relates to light having a wavelength selected from the range of 380-780 nm That is, the 3D printable material may allow light to pass through it, especially visible light. Transmissivity of visible light through the 3D printable material in a direction perpendicular to its surface may be at least 50%, such as at least about 75%, like in embodiments at least 90%, even more especially at least about 100%. Therefore, in embodiments, the 3D printable material may be transmissive. Further, the 3D printable material may be transmissive (only) for light of specific wavelengths. Hence, this may provide the advantage of filtering certain wavelengths i.e. this may provide the advantage of providing light of certain specific colors.

Alternatively or additionally, other optical properties may be relevant, such as reflection, absorption, and luminescence. Hence, the optical features of the 3D printable material may include being reflective for visible light, absorptive for visible light, transmissive for visible light, and/or luminescent upon receiving visible light.

Especially, in embodiments the 3D printable material may be reflective for visible light. Hence, the optical features of the 3D printable material may provide desired optical effects to the 3D item. Especially, the 3D printed item may be reflective to light, hence when it receives light it may reflect it in other directions. In embodiments, the 3D printable material may comprise luminescent material. Luminescent materials may convert light incident on it, such as radiation incident on the surface of the luminescent material may be converted into luminescent material light.

Especially, the properties of the 3D printable material may also apply to the 3D printed material.

In embodiments, during the 3D printing stage, the one or more layers or layer parts may comprise different 3D printable materials, and hence, may differ in the physical properties of the 3D printable material used, such as in composition, color, density, viscosity, permeability to light, etc. Hence, in embodiments, the method may comprise using different 3D printable materials, wherein the different 3D printable materials differ in optical properties.

As indicated above, also within layers there may be a change of material, and thus materials properties. Further as indicated above, the protruding layer part may comprise a material different from the remainder of the second layer and/or different from the first layer.

In embodiments, there may be k different materials, wherein k is at least 2. The different materials may differ in one or more of optical properties, mechanical properties, and other material properties. Other material properties may include e.g. one or more of thermal conductivity, electrical conductivity, adhesiveness, etc. Note that it is not necessary that k different materials are used, rather, in embodiments, the method may (also) comprise using only one type of 3D printable material.

The mechanical properties may refer to one or more of flexibility, tensile strength, surface roughness, etc.

As indicated above, a first material and a second material may differ in optical properties. In specific embodiments, the optical properties may be selected from the group of (a) absorption of light having a first wavelength, (b) diffuse reflection for light having the first wavelength, (c) specular reflection for light having the first wavelength, (d) transmission of light having the first wavelength, and I conversion of light having the first wavelength.

When different materials have different optical properties, this may especially indicate that they appear different to the human eye (or optical sensor) under identical observation conditions. For instance, two parts comprising the same materials, but appear different only due to a different arrangement of the parts, by which e.g. reflective properties differ to the human eye, may not be considered to have different optical properties, as e.g. under perpendicular observation, the parts may appear to have identical properties.

However, two materials of two or more parts having essentially the same absorption (i.e. absorption of light), but one part able to convert part of the absorbed light having the first wavelength and the other part not able to convert, lead to materials that appear different to the human eye (or optical sensor), and thus have different optical properties. The same may e.g. apply to materials of two or more parts having essentially the same transmission value (of light), but one part having a low transparency (for light) due to the absorption of the light and the other part having a relatively low transparency (for light) due to scattering, may lead to materials that appear different to the human eye (or optical sensor), and thus have different optical properties.

In specific embodiments the optical properties may be selected from the group (a) having a white color, (b) being black, (c) having metallic appearance, and (d) being light transparent. Alternatively or additionally, in specific embodiments the optical properties may be selected from the group (a) light reflectivity and (b) light transmissivity. Instead of the term "metallic appearance", and similar terms, also the term "metallic color", and similar terms, may be applied.

Hence, especially there may be a first material of the k materials having a first optical property and a second material of the k materials having a second optical different from the first optical property.

One of the optical properties may be ≥60% absorption (especially ≥70% absorption, more especially ≥75% absorption, most especially ≥80% absorption) of light having the first wavelength, wherein a conversion of the absorbed light (having the first wavelength) is ≤10% (especially the conversion of the absorbed light is ≤6%, more especially the conversion of the absorbed light is ≤3%, most especially the conversion of the absorbed light is ≤1%) of the absorbed light having the first wavelength. Hence, the light is absorbed without substantial conversion, like in the case of pigments. Especially, the absorption of the light having the first wavelength may be determined under perpendicular radiation of the material (or 3D printed material) with the light having the first wavelength.

One of the optical properties may be ≥60% reflection (especially ≥70% reflection, more especially ≥75% reflection, most especially ≥80% reflection) of light having the first wavelength. Hence, absorption of the light having the first wavelength may especially be less than 40% (especially less than 30%, more especially less than 25%, most especially less than 20%). Especially, the reflection of the light having the first wavelength may be determined under perpendicular radiation of the material (or 3D printed material) with the light having the first wavelength.

One of the optical properties may be ≥60% transmission of light having the first wavelength (especially ≥70% transmission, more especially ≥75% transmission, most especially ≥80% transmission). Hence, absorption and reflection may be less than 40% (especially less than 30%, more especially less than 25%, most especially less than 20%). Especially, the transmission of the light having the first wavelength may be determined under perpendicular radiation of the material (or 3D printed material) with the light having the first wavelength.

One of the optical properties may be absorption and conversion of light having the first wavelength into second light having a spectral power distribution different from the absorbed light, wherein the conversion (of light) is at least 20% of the absorbed light having the first wavelength (especially at least 30%, more especially at least 35%, most especially at least 40%, more especially at least 50%, like e.g. at least 60%, yet even more especially at least 70%). Especially, the conversion of the light having the first wavelength may be determined under perpendicular radiation of the material with the light having the first wavelength. More especially, the absorption of light having the first wavelength is at least 30%, even more especially at least 50%, such as yet even more especially at least 60%. As indicated above, especially the absorption of the light having the first wavelength may be determined under perpendicular radiation of the material with the light having the first wavelength. Further, in embodiments, is at least 30% of the absorbed light having the first wavelength, like at least 50%, even more especially at least 60%.

Hence, in embodiments one or more materials of one or more parts may have a high reflection and one or more other materials of one or more (other) parts may have a low reflection. Hence, one or more parts may have a high reflection and one or more other parts may have a low reflection.

Hence, in embodiments one or more materials of one or more parts may have a high absorption and one or more other materials of one or more (other) parts may have a low absorption. Hence, one or more parts may have a high absorption and one or more other parts may have a low absorption.

Hence, in embodiments one or more materials of one or more parts may have a high transmission and one or more other materials of one or more (other) parts may have a low transmission. Hence, one or more parts may have a high transmission and one or more other parts may have a low transmission.

Hence, in embodiments one or more materials of one or more parts may have a high conversion (of light) and one or more other materials of one or more (other) parts may have a low conversion. Hence, one or more parts may have a high conversion and one or more other parts may have a low conversion.

In embodiments, a difference between high and low may be a ratio of at least 1.25, like at least 1.5, such as at least 2, of the ratio of optical property for the two different materials. For instance, this may be a ratio of high reflection, absorption, transmission, conversion, and low reflection, absorption, transmission, conversion, respectively. Likewise, such ratio may apply also in embodiments where the difference in material properties would refer to mechanical properties or other material properties (see also above)

When two or more different optical properties are selected, these may in embodiments be individually selected from the group of high reflection, low reflection, high absorption, low absorption, high transmission, low transmission, high conversion, and low conversion. In other embodiments, two or more different optical properties are selected, these may in embodiments be individually selected from the group of high reflection, low reflection, high absorption, low absorption, high transmission but scattering, low transmission and scattering, high transmission and highly transparent, low transmission (and low transparency but essentially not due to scattering), high conversion, and low conversion.

Hence, in an example a first part may have a high absorption and a second part may have a low absorption. However, in another example a first part may have a high absorption and a second part may have a high transmission. In yet another example, a first part has a high conversion and a second part has a high transmission. In yet another example, a first part may have a low transmission (but is transparent) and a second part has a low transmission (but is scattering). Other examples may also be possible.

The term "light having the first wavelength", and similar terms, may especially refer to light having a wavelength in the visible. The term "first wavelength" may also refer to a plurality of different wavelengths. For instance, light having the first wavelength may refer to essentially monochromatic light, but may also refer to ambient light or artificial white light. Hence, terms like "absorption", "conversion", "transmission", or "reflection" may especially refer to absorption, conversion, transmission, or reflection of light having one or more wavelengths in the visible (especially selected from the wavelength range of 380-780 nm). Hence, instead of the terms "absorption", "conversion", "transmission", or "reflection" also the "light absorption", "light conversion", "light transmission", or "light reflection", respectively, may be applied. The phrase "having a wavelength", and similar phrases, may specially indicate that the light has spectral power at such wavelength. White light may thus have a plurality of wavelengths in the wavelength range of 380-780 nm. Especially, a light transmissive material may be translucent or transparent.

Hence, especially a first optical property of a first material of the k materials and a second optical property of a second material of the k materials are different, and may be selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength.

When optical properties differ, and a second material encloses a first material, then it may be useful when the second material is transmissive for visible light having the first wavelength, such as for white light. For instance, the transmission of visible light through the second material may in embodiments be at least 60% (one way), such as at least 80%, like even at least about 85%, such as at least about 90%. For instance, a second part may at least partially enclose a first part, like a core-shell arrangement of a core comprising the first material and a shell comprising the second material.

The second layer may comprise a first part, which may e.g. have essentially the same dimensions as the first layer, and the protruding layer part. These parts may comprise the same materials or different materials. In embodiments, the method may comprise providing (i) the protruding layer part and the first part using the different 3D printable materials, respectively. Using different 3D printable materials for the first part and the second layer part may provide the benefit of altering the optical properties of the 3D item, such as the color of the light transmitted or reflected from the one or more layers. Here, first part and second layer part may refer to a part of the first layer and a part of the second layer, respectively.

In embodiments, the 3D printable material may be altered during the printing stage, hence providing a plurality of 3D printable materials in the first layer and second layer. Altering the material during printing may be done by using different materials consecutively via the same printer nozzle, by using different printer nozzles for different materials, or using a core-shell printer nozzle and feeding different materials to the core nozzle and shell nozzle, respectively. Hence, by controlling the flow of materials to the nozzle(s), different materials may be provided in the same layer (or for different layers).

However, in other embodiments, during the 3D printing stage, the one or more layers or layer parts may comprise the same 3D printable materials, and hence, may not differ in the physical properties of the 3D printable material used. Hence, in embodiments, the method may comprise using the same 3D printable materials for 3D printing different parts and/or different layers.

When 3D printing, a plurality of protruding layer parts may be provided.

Yet further, in embodiments, the arrangement of the protruding layer parts on the first layers may be configured in arrays. Especially, the protruding layer part may be configured in a 1D array. In embodiments, the 1D array of protruding layer part(s) may be generated in a direction along the printing paths (Aₚ). Alternatively, in embodiments, the 1D array of protruding layer part(s) may be generated perpendicular to the printing paths (Aₚ). Further, in embodiments, the protruding layer parts may be spaced apart along the printing paths (A_{P}) and perpendicular to the printing paths (A_{P}), hence providing a 2D array of protruding layer parts. Therefore, in embodiments, the method may comprise providing a plurality of protruding layer parts. Especially, the protruding layer parts may be configured in a 1D array or in a 2D array. In further embodiments, the protruding layer parts may be provided in a staggered arrangement or along a diagonal by altering the position of the protruding layer part from the (preceding) protruding layer part in a direction (i) along the printing path, and/or (ii) perpendicular to the printing path.

In embodiments, the 3D printable material and the 3D printed material may have a glass transition temperature T_{g} selected from the range of 50-200 °C, such as in the range of 80-180°C, such as in the range from 100-160°C and/or a melting temperature Tₘ selected from the range of 80-250 °C, such as in the range from 100-240°C, such as in the range from 120-200°C. Further, the melt volume flow rate according to ISO 1133 12 at 300 °C/ 1.2 kg may be selected from the range of 5-100 cm³/10 min. Hence, in embodiments a flow rate of the 3D printable material may be selected from the range 5-100 cm³/10 min.

ISO 1133 12, which defines the dimensions, temperature, and weight, may e.g. be used to measure amount of material coming out per unit time (cm³/10 min). The temperature and the weight used during the measurement may e.g. be 300 °C and 1.2 kg, respectively.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action may comprises heating the 3D printable material above the glass transition and in embodiments above the melting temperature (especially when the thermoplastic polymer is a semi-crystalline polymer). In yet another embodiment, the 3D printable material comprises a (thermoplastic) polymer having a melting point (Tₘ), and the 3D printing stage may comprise heating the 3D printable material to be deposited on the receiver item to a temperature of at least the melting point. The glass transition temperature is in general not the same thing as the melting temperature. Melting is a transition which may occur in crystalline polymers. Melting may happen when the polymer chains fall out of their crystal structures, and become a disordered liquid. The glass transition may be a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention may thus provide a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material may comprise a 3D printable material selected from the group consisting of Urea formaldehyde, Polyester resin, Epoxy resin, Melamine formaldehyde, thermoplastic elastomer, etc... Optionally, the 3D printable material may comprise a 3D printable material selected from the group consisting of a polysulfone. Elastomers, especially thermoplastic elastomers, may especially be interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-1-pentene and 1-octadecene.

In specific embodiments, the 3D printable material (and the 3D printed material) may comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polytethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but may especially refer to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture may especially not be larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material may especially refer to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material may be printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material may be deposited, by which the 3D printed item may be generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Post-processing may include smoothening the ribbed structures, which may lead to an essentially smooth surface.

Further, the invention relates to a software product that can be used to execute the method described herein. Therefore, in yet a further aspect the invention also provides a computer program product, when running on a computer which is functionally coupled to or comprised by a fused deposition modeling 3D printer, is capable of bringing about the method as described herein.

Hence, in an aspect the invention (thus) provides a software product, which, when running on a computer is capable of bringing about (one or more embodiments of) the method (for producing a 3D item by means of fused deposition modelling) as described herein.

The herein described method provides 3D printed items. Hence, the invention also provides in a further aspect a 3D printed item obtainable with the herein described method. In a further aspect a 3D printed item obtainable with the herein described method is provided. Especially, the invention provides a 3D item comprising 3D printed material. Especially, the 3D item may comprise a plurality of layers of 3D printed material. Further, the plurality of layers may comprise at least a first layer and an adjacent second layer (in a stacked configuration).

The 3D printed item may, in embodiments, be provided by the layer-wise deposition of 3D printable material. Hence, the 3D item may comprise a plurality of first layers of 3D printed material. Especially, the (each) first layer may have a top, a bottom and side surface(s) such the bottom surface of each layer is in contact with the top surface of the preceding layer while the side surfaces remain exposed. More especially, the 3D item may (also) comprise a second layer in contact with the first layer. In embodiments, the second layer may be provided over the top surface of a first layer, or may (also) be provided over the side surface of the first layer (such as during the 3D printing stage wherein the second layer is flowed over the first layer).

Hence, the phrase "first layer and adjacent second layer" may especially refer to the second layer in contact with the top surface or the side surface of the first layer. In embodiments, the 3D item further comprises a protruding layer part associated to the second layer and at least partly covering a side face of the first layer. In a specific embodiment, the invention may provide a 3D item comprising 3D printed material, wherein the 3D item comprises a plurality of layers of 3D printed material, wherein the plurality of layers comprises at least a first layer and an adjacent second layer, wherein the 3D item further comprises a protruding layer part associated to the second layer and at least partly covering a side face of the first layer.

Especially, the 3D item may comprise one or more layers of 3D printed material. More especially, the 3D item may comprise a plurality of layers of 3D printed material. The 3D item may comprise two or more, like at least 10, such as at least 20, like in embodiments at least 50 layers of 3D printed material.

The 3D printed item may comprise a plurality of layers on top of each other, i.e. stacked layers. The width (thickness) and height of (individually 3D printed) layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Some specific embodiments in relation to the 3D printed item have already been elucidated above when discussing the method. Below, some specific embodiments in relation to the 3D printed item are discussed in more detail.

As indicated above, in embodiments, the 3D item may comprise a plurality of layers of 3D printed material. The 3D item may comprise layers of 3D printed material that are stacked above one another such that they form a part of the 3D item. Further, the plurality of layers may comprise at least a first layer and an adjacent second layer (in a stacked configuration). In embodiments, the same 3D printable material may (also) be used to provide both the first layer and the second layer. In embodiments, the 3D item may further comprise a protruding layer part associated to the second layer and at least partly covering a side face of the first layer. The protruding layer part on the side face of the first layer may flow over the first layer during the deposition of 3D printable material. Hence, the protruding layer part may be associated to the second layer.

As mentioned before, in embodiments, the protruding layer part may be associated with the second layer, meaning that the protruding layer part may be in contact with the second layer i.e. the protruding layer part in embodiments may be deposited separate from the deposition of the second layer but may however be deposited such that it contacts one or more faces of the second layer.

The 3D printable material may be adhered to side face of the first layer. By altering one or more of the printing speed, or the extrusion rate, or nozzle temperature during the 3D printing stage, in embodiments, a larger or smaller width of 3D printed material may be provided. Further, as mentioned before, the 3D printable material may be flowed during the 3D printing stage. Especially, the second layer may be deposited over the first layer such that (for a short duration) the second layer may be flowed over the first layer (before solidification). That is, in embodiments, the second layer deposited on the top surface or the side surface of the first layer may flow over the first layer (immediately following the deposition of 3D printable material).

Furthermore, the protruding layer part may be provided during the deposition of the second layer. On cooling, the 3D printable material may adhere to side face of the first layer. As a result of flowing the 3D printable material (as described above) amorphous drip-like shaped protruding layer parts (comprising 3D printed material) may be achieved on the side face of the first layer. Hence, the protruding layer part may be associated to the second layer and at least partly covers a side face of the first layer. Further, as mentioned before, the protruding layer part may be provided wherein, in embodiments, the width of the protruding layer part may be controlled by controlling one or more of the printing speed, extrusion rate and the nozzle temperature during the 3D printing stage. Hence, in embodiments, the protruding layer part may thus comprise an increased layer width, relative to one or more other layer parts of the same layer which was/were 3D printed under other 3D printing conditions. Yet further, by adapting the extrusion rate _{VE}, printing speed _{VP}, and printing temperature T_{N}, a multitude of different shapes (of the protruding layer part) may be provided. The protruding layer part may be the solidified result of some of the 3D printable material flowing down a previously printed layer (or (even) flowing down previously printed layers).

In embodiments, the protruding layer part may have a hairpin bend (or "hairpin turn") structure. Especially, the protruding layer part may be a layer part comprising 3D printable material that is folded over itself. A description of the hairpin bend structure is provided (see further above).

In embodiments, the 3D item may comprise 3D printed layers along parallel axes of elongation (Aₒ) that provide a stack comprising a plurality of the layers. That is, the 3D printable material is deposited by extrusion through a nozzle along a line to form the stack of 3D printed material (along parallel axes of elongation). The subsequent layers in the stack (comprising 3D printed material) may be formed by deposition of 3D printable material in a similar way above the preceding layer. In embodiments, the number of layers in the stack may be at least 10, such as at least 20, such at least 50. Hence, in embodiments, the 3D item may comprise 3D printed layers configured along parallel printing paths (Aₚ). Hence, the 3D printed item may comprise a stack comprising a plurality of the layers. Note that the axes of elongation of the layers may be straight or may include one or more curves.

Especially, the 3D item may further comprise along a connection line configured within the stack and configured perpendicular to the printing paths (Aₚ) (or axes of elongation) of the layers of the stack, one in n layers of such protruding layer part. Especially, the n layers of the protruding layer part may be generated such that n≥5, such as n≥15, especially n≥25, especially n≥50. Hence, a stack of 50 layers may in embodiments e.g. comprise 1-10 protruding layers parts.

Further, in embodiments, in a vertical direction i.e. perpendicular to the parallel axes of elongation (Aₒ) of the layers of the stack, each protruding layer part may be in contact with the preceding layer part. Alternatively, in embodiments, the protruding layer parts may also be spaced apart in a direction perpendicular to the parallel axes of elongation (Aₒ) of the layers of the stack, such that each of the protruding layer parts are not in contact with the preceding protruding layer part.

In embodiments, the second layer may have a layer width (W), a layer height (H) and a length (L).
Further, in embodiments, the protruding layer part may comprise a layer width (W1), and a protrusion height (HI) of the protruding layer part. Especially, 0.5≤W1/W≤25, more especially 1.25≤W1/W≤25, such as 1.5≤W1/W≤10, such as 1.75≤W1/W≤5. Further especially, 1.5<H1/H<100, such as 2≤H1/H≤50, more especially 2.5≤H1/H≤20. In embodiments, 1.5≤H1/H≤15, such as 3≤H1/H≤15, especially 3.5≤H1/H≤10. For instance, when the layers heights of the first layer and the second layer are essentially the same, and when H1/H=2, then, the protruding layer part may cover the side face of the first layer essentially over the entire height.

In embodiments, the protruding layer part (comprised by the 3D item) may have the locally increased layer width (W1) at least greater than 2 mm, such as at least greater than 3 mm, especially at least greater than 4 mm. Further, in embodiments, the protruding layer part may have the protrusion height (HI) at least greater than 2 mm, such as at least greater than 3 mm, especially at least greater than 4 mm.

In embodiments, the second layer may comprise (i) a first part having a first length (L_{L1}) and having the layer width (W). Further, the second layer part may comprise (ii) the protruding layer part having a second length (L_{L2}) and having the increased layer width (W1). Hence, in embodiments the second layer may comprise (i) a first part having a first length (L_{L1}) and having the layer width (W) and (ii) the protruding layer part (1320) having a second length (L_{L2}) and having the increased layer width (W1). Especially, 0.0≤L_{L1}/L_{L2}≤20, such as 0.0≤L_{L1}/L_{L2}≤10, such as 0.0≤L_{L1}/L_{L2}≤0.95. Embodiments of the dimensions of the one or more layers and the protruding layer part have also been described above.

As mentioned before, 3D printable material may be flowed during deposition. Hence, the geometry of the (solidified) protruding layer part may not be purely polygonal. Therefore, the protruding layer part may have an equivalent diameter D_{ec} which corresponds to the diameter of a circle with the same area as a rectangle with height h and width w. Especially, D_{ec} may be selected such, that the following applies: 1.25≤ D_{ec}/W1≤25, such as 1.5≤D_{ec}/W1≤10, such as 1.75≤D_{ec}/W1≤5.

The 3D printed material may in embodiments have properties that vary, such as, a first part may have a first property and a second part may have a second property. However, in other embodiments, the first part and the second part may essentially be the same. Hence, different parts may essentially have the same material and the same properties. Here below, some properties are described.

Alternatively or additionally, the 3D printed material may exhibit one or more optical properties such as reflection, absorption, and luminescence. Hence, the optical features of the 3D printed material may include being reflective for visible light, absorptive for visible light, transmissive for visible light, and/or luminescent upon receiving visible light.

In embodiments, the 3D printed material may be transmissive for visible light. That is, the 3D printed material may allow light to pass through it, especially visible light. Transmissivity of visible light through the 3D printed material in a direction perpendicular to its surface may be at least 50%, such as at least about 75%, like in embodiments at least 90%, even more especially at least about 100%. Therefore, in embodiments, the 3D printed material may be transparent. Further, the 3D printed material may be transmissive (only) for light of specific wavelengths. Hence, this may provide the advantage of filtering certain wavelengths i.e. this may provide the advantage of providing light of certain specific colors.

In embodiments, the 3D item may comprise different 3D printed materials. Especially, the protruding layer part and the first part may comprise different 3D printed materials, respectively. That is, the protruding layer part (comprising 3D printable material) may be different from the first layer (comprising 3D printable material) in the physical properties of the 3D printable material used, such as composition, color, density, viscosity, etc. More especially, the different 3D printed materials may differ in optical properties. Further, the different 3D printed materials may differ in optical properties. Especially, the 3D item may further comprise (i) the protruding layer part and the first part using the different 3D printed materials, respectively. Different 3D printed materials in the first part and the second layer part may provide the benefit of altering the optical properties of the 3D item, such as the color of the light transmitted or reflected from the one or more layers.

Especially, in embodiments the 3D printed material may be reflective for visible light. Hence, the optical features of the 3D printed material may provide desired optical effects to the 3D item. Especially, the 3D printed item may be reflective to light, hence when it receives light it may reflect it in other directions. In embodiments, the 3D printed material may comprise luminescent material. Luminescent materials may convert light incident on it, such as radiation incident on the surface of the luminescent material may be converted into luminescent material light.

Hence, especially 3D item may have a first material of the k materials having a first optical property and a second material of the k materials having a second optical different from the first optical property. The absorption, reflection, transmission and light conversion related properties of the 3D printed material has been discussed (also in relation to the 3D printable material) have been discussed further above.

Hence, in embodiments one or more 3D printed materials of one or more parts may have a high reflection and one or more other materials of one or more (other) parts may have a low reflection. Hence, one or more parts may have a high reflection and one or more other parts may have a low reflection.

Hence, in embodiments one or more 3D printed materials of one or more parts may have a high absorption and one or more other materials of one or more (other) parts may have a low absorption. Hence, one or more parts may have a high absorption and one or more other parts may have a low absorption.

Hence, in embodiments one or more 3D printed materials of one or more parts may have a high transmission and one or more other materials of one or more (other) parts may have a low transmission. Hence, one or more parts may have a high transmission and one or more other parts may have a low transmission.

Hence, in embodiments one or more 3D printed materials of one or more parts may have a high conversion (of light) and one or more other materials of one or more (other) parts may have a low conversion. Hence, one or more parts may have a high conversion and one or more other parts may have a low conversion.

In embodiments, a difference between high and low may be a ratio of at least 1.25, like at least 1.5, such as at least 2, of the ratio of optical property for the two different materials. For instance, this may be a ratio of high reflection, absorption, transmission, conversion, and low reflection, absorption, transmission, conversion, respectively. Likewise, such ratio may apply also in embodiments where the difference in material properties would refer to mechanical properties or other material properties (see also above)

Further, in embodiments, the one or more layers or layer parts comprised by the 3D printed material may comprise different 3D printed materials which may differ in the physical properties, such as in composition, color, density, viscosity, permeability to light, etc.

As indicated above, also within layers there may be a change of material, and thus materials properties. Further as indicated above, the protruding layer part may comprise a material different from the remainder of the second layer and/or different from the first layer.

In embodiments, there may be k different materials, wherein k is at least 2. The different materials may differ in one or more of optical properties, mechanical properties, and other material properties. Other material properties may include e.g. one or more of thermal conductivity, electrical conductivity, adhesiveness, etc. Note that it is not necessary that k different materials are used, rather, in embodiments, the 3D item may (also) comprise using only one 3D printed material.

Further, in embodiments, the 3D item may comprise a plurality of protruding layer parts. Especially, the protruding layer parts may be configured in a 1D array. In embodiments, the 1D array of protruding layer part(s) may be positioned in a direction along the printing paths (Aₚ). Alternatively, in embodiments, the 1D array of protruding layer part(s) may be positioned perpendicular to the printing paths (Aₚ). Yet further, in embodiments, the protruding layer parts may be positioned in direction along the printing paths (Aₚ) and perpendicular to the printing paths (Aₚ), and therefore be positioned in a 2D array. Hence, in embodiments, the protruding layer parts may be configured in a 1D array or in a 2D array. In further embodiments, the 3D item comprising the protruding layer parts may be provided in a staggered arrangement or along a diagonal by altering the position of the protruding layer part from the (preceding) protruding layer part in a direction (i) along the printing path, and/or (ii) perpendicular to the printing path.

The (with the herein described method) obtained 3D printed item may be functional per se. For instance, the 3D printed item may be a lens, a collimator, a reflector, etc... The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material.

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate according to the method as further described herein.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system. Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology. The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability). Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2b schematically depicts some aspects of the protruding layer part;
Figs. 3a-3d schematically depicts the configuration of the second layer over the first layer;
Fig. 4 schematically depicts an application.

The schematic drawings are not necessarily to scale.

### DETAILED DESCRIPTION OF THE EMBODIMENTS

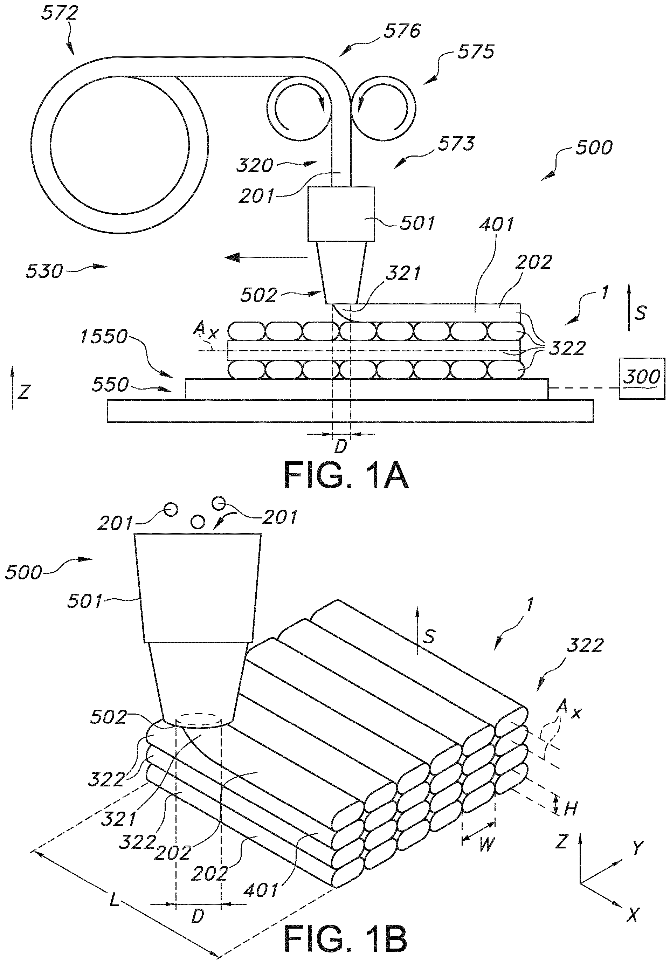

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer of the present invention may especially include a plurality of printer nozzles, though other embodiments are also possible. Reference 320 indicates a filament of printable 3D printable material (such as indicated above).

Instead of a filament also pellets may be used as 3D printable material. Both can be extruded via the printer nozzle.

For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 320 upstream of the printer head 501. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference Ax indicates a longitudinal axis or filament axis.

Reference 300 schematically depicts a control system. The control system may be configured to control the 3D printer 500. The control system 300 may be comprised or functionally coupled to the 3D printer 500. The control system 300 may further comprise or be functionally coupled to a temperature control system configured to control the temperature of the receiver item 550 and/or of the printer head 501. Such temperature control system may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material. Hence, the nozzle 502 may effectively produce from particulate 3D printable material 201 a filament 320, which upon deposition is indicated as layer 322 (comprising 3D printed material 202). Note that during printing the shape of the extrudate may further be changes, e.g. due to the nozzle smearing out the 3D printable material 201 / 3D printed material 202. Fig. 1b schematically depicts that also particulate 3D printable material 201 may be used as feed to the printer nozzle 502.

Reference D indicates the diameter of the nozzle (through which the 3D printable material 201 is forced). However, the nozzle is not necessarily circular.

Fig. 1b schematically depicts in 3D in more detail the printing of the 3D item 1 under construction. Here, in this schematic drawing the ends of the layers in a single plane are not interconnected, though in reality this may in embodiments be the case.
Reference H indicates the height of a layer. Layers are indicated with reference 322. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Fig. 1a schematically depict some aspects of a fused deposition modeling 3D printer 500, comprising (a) a first printer head 501 comprising a printer nozzle 502, (b) a filament providing device 575 configured to provide a filament 320 comprising 3D printable material 201 to the first printer head 501, and optionally (c) a receiver item 550, which can be used to provide a layer of 3D printed material 202.

Fig. 1b schematically depict some aspects of a fused deposition modeling 3D printer 500 (or part thereof), comprising a first printer head 501 comprising a printer nozzle 502, and optionally a receiver item (not depicted), which can be used to which can be used to provide a layer of 3D printed material 202. Such fused deposition modeling 3D printer 500 may further comprise a 3D printable material providing device, configured to provide the 3D printable material 201 to the first printer head. Reference L refers to the length of a layer 322.

In Figs. 1a-1b, the first or second printable material or the first or second printed material are indicated with the general indications printable material 201 and printed material 202, respectively. Downstream of the nozzle 502, the filament 320 with 3D printable material becomes, when deposited, layer 322 with 3D printed material 202. In Fig. 1b, by way of example the extrudate is essentially directly the layer 322 of 3D printed material 202, due to the short distance between the nozzle 502 and the 3D printed material (or receiver item (not depicted).

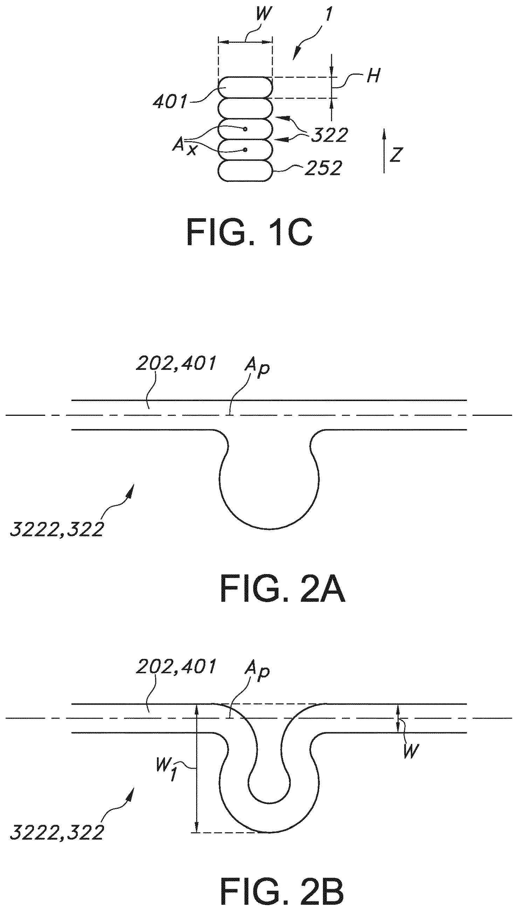

Fig. 1c schematically depicts a stack of 3D printed layers 322, each having a layer height H and a layer width W. Note that in embodiments the layer width and/or layer height may differ for two or more layers 322. The layer width and/or layer height may also vary within a layer. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

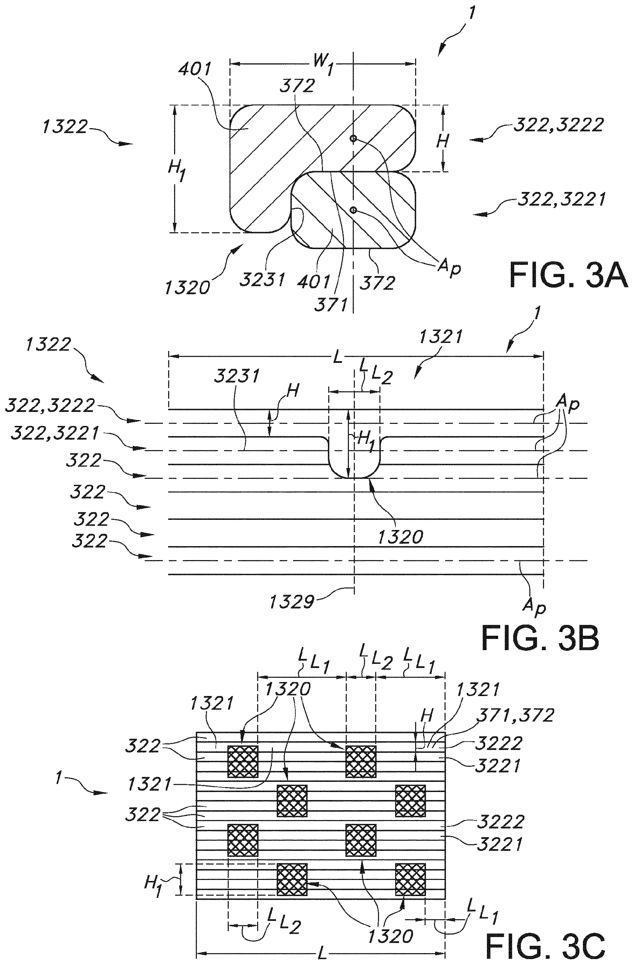

Fig. 2a schematically depicts an aspect of the protruding layer part 1320. Referring to Figs. 1a-1c, and also Figs. 3A-3b, in embodiments, the invention may provide a method for producing a 3D item 1 comprising a plurality of layers 322 of 3D printed material 202 by means of fused deposition modelling. Especially, the method may comprise a 3D printing stage comprising layer-wise depositing on a receiver item 550 an extrudate 321 comprising 3D printable material 201, including 3D printing of a second layer 3222 on a top face 371 (see also Fig. 3A) of a first layer 3221 to provide the 3D item 1. Further, the method may comprise temporarily adapting during the 3D printing stage comprising one or more of (i) an extrusion rate v_{E}, (ii) a printing speed v_{P}, and (iii) a printing temperature T_{N} to provide a locally increased layer width W1 and a protrusion height HI of the second layer 3222 thereby providing a protruding layer part 1320. In embodiments, the protruding layer part 1320 may be associated to the second layer 3222 and at least partly covers a side face 3231 of the first layer 3221. Hence, the figure depicts a top cross-sectional view of the protruding layer part formed by the deposition of excess 3D printable material.

In embodiments, the 3D item 1 may comprise a plurality of layers 322 of 3D printed material 202. Especially, the plurality of layers 322 may comprise at least a first layer 3221 and an adjacent second layer 3222 in a stacked configuration. Moreover, the 3D item may further comprise a protruding layer part 1320 associated to the second layer 3222 and at least partly covering a side face 3231 of the first layer 3221.

Fig. 2b schematically depicts an aspect of the protruding layer part 1320. In embodiments, the protruding layer part 1320 may have a hairpin bend structure. Yet further, the protruding layer part 1320 may comprise the locally increased layer width W1 to the second layer 3222. The line Aₚ depicts the printing path along which the nozzle may deposit 3D printable material. In embodiments the method may comprise while 3D printing the second layer 3222, (i) temporarily increasing the extrusion rate v_{E} with at least 100% and/or (ii) temporarily reducing the printing speed v_{P} with at least 50%, and/or (iii) temporarily increasing the printing temperature T_{N} with at least 20 °C to provide the protruding layer part 1320.

Further, the 3D printable material 201 may be transmissive for visible light. Especially, the 3D printed material 202 may (also) be transmissive for visible light. Especially, the different 3D printable materials 201 may differ in optical properties. In embodiments, the method may further comprise providing (i) the protruding layer part 1320 and the first part 1321 using the different 3D printable materials 201, respectively.

Further, in embodiments, the 3D printable material 201 and the 3D printed material 202 may have a glass transition temperature T_{g} selected from the range of 50-200 °C and/or a melting temperature Tₘ selected from the range of 80-250 °C. Especially, the 3D printable material 201 at the printing temperature T_{N} has a Newtonian viscosity selected from the range of 500-8000 Pa.s.

Fig. 3a schematically depicts (in a cross-sectional view perpendicular to the printing path) the configuration of the second layer over the first layer. In embodiments, the method may comprise controlling one or more of the extrusion rate v_{E}, the printing speed v_{P}, and the printing temperature T_{N}, such as to provide the second layer 3222 with the layer width (W) and the locally increased layer width W1, a layer height H, and the protrusion height HI of the protruding layer part (1320), wherein 1.25≤W1/W≤25. As indicated above, the method may comprise a 3D printing stage comprising layer-wise depositing (on a receiver item 550 an extrudate 321 comprising) 3D printable material 201, including 3D printing of a second layer 3222 on a top face 371 of a first layer 3221 to provide the 3D item 1.

Especially, the top face 371 may be flattened. Further, such 3D printed layer may comprise a bottom face 372. A distance between the bottom face 372 and the top face 371 may be the layer height H. The bottom face 372 of the second layer 3222 may be in contact with the top face 371 of the first layer 3221.

In embodiments, the invention may provide a 3D item 1 comprising 3D printed material 202. Especially, the 3D item 1 may comprise a plurality of layers 322 of 3D printed material 202, wherein the plurality of layers 322 may comprise at least a first layer 3221 and an adjacent second layer 3222 in a stacked configuration. Especially, the 3D item may further comprise a protruding layer part 1320 associated to the second layer 3222 and at least partly covering a side face 3231 of the first layer 3221.

Further, the second layer 3222 with the layer width (W) and the locally the increased layer width (W1), may have a layer height (H), and a protrusion height (HI) of the protruding layer part 1320, wherein 1.25≤W1/W≤25, and wherein 1.5≤H1/H≤100. In fig. 3A, H<H1<2^{∗}H. The protruding layer part nearly entirely covers the side face of the fist layer (but not fully in this schematically depicted embodiment).

Fig. 3b schematically depicts the configuration of the second layer over the first layer. In embodiments, the second layer 3222 may comprise (i) a first part 1321 having a first length (L_{L1}) and having the layer width (W) and (ii) the protruding layer part 1320 having a second length (L_{L2}) and having the increased layer width (W1). Especially, 0.0≤L_{L1}/L_{L2}≤0.95. Further, the second layer 3222 (comprised by the 3D item) may comprise (i) a first part 1321 having a first length (L_{L1}) and having the layer width (W) and (ii) the protruding layer part 1320 having a second length (L_{L2}) and having the increased layer width (W1). Especially 0.0≤L_{L1}/L_{L2}≤0.95.

In embodiments, the method may comprise controlling one or more of the extrusion rate v_{E}, the printing speed v_{P}, and the printing temperature T_{N}, such as to provide the protruding layer part 1320 with an equivalent circular diameter D_{ec}, defined perpendicular to the increased layer width (W1), may be selected such that the following applies 1.25≤ D_{ec}/W1≤25.

Fig. 3c schematically depicts the configuration of the second layer over the first layer. In embodiments, the method may comprise 3D printing layers 322 along parallel printing paths (Aₚ) to provide a stack 1322 comprising a plurality of the layers 322. Especially, the method may further comprise generating along a connection line 1329 configured within the stack 1322 and configured perpendicular to the printing paths (Aₚ) of the layers (322) of the stack, one in n layers 322 of such protruding layer part 1320, wherein n≥5. As can be derived from Fig. 3c, there can be more sets of first layer and second layer, and the first layer is not necessarily the lowest layer of the stack 1322.

In embodiments, the method may comprise providing a plurality of protruding layer parts 1320, wherein the protruding layer parts (1320) are configured in a 1D array or in a 2D array.

Further, in embodiments, the 3D item may have 3D printed layers 322 along parallel printing paths (Aₚ) that provide a stack 1322 comprising a plurality of the layers 322. Especially, the 3D item 1 may further comprise along a connection line 1329 configured within the stack 1322 and configured perpendicular to the printing paths (Aₚ) of the layers 322 of the stack, one in n layers 322 of such protruding layer part 1320. Especially, n≥5. Especially, the protruding layer parts 1320 may be configured in a 1D array or in a 2D array.

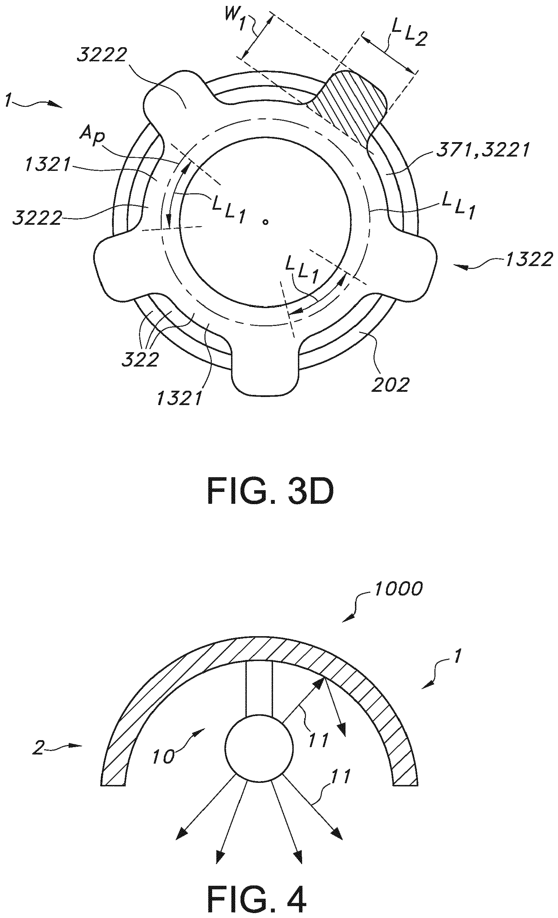

Fig. 3d schematically depicts a top view of an embodiment of a 3D item 1.

Referring e.g. to Figs. 3a-3c, in embodiments one or more of the following may apply: (i) printing speed selected from the range of 0.5-30 cm/s, (ii) deposition rate selected from the range of 2.5 mg/s - 15g/s, (iii) the width W=1-10 mm, and (iv) the height H=0.5-5mm. The printing speed and/or the deposition rate during printing the first layer and the first part of the second layer, may thus be different from during printing the protruding layer part.

Fig. 4 schematically depicts an embodiment of a lamp or luminaire, indicated with reference 2, which comprises a light source 10 for generating light 11. The lamp may comprise a housing or shade or another element, which may comprise or be the 3D printed item 1. Here, the half sphere (in cross-sectional view) schematically indicates a housing or shade. The lamp or luminaire may be or may comprise a lighting device 1000 (which comprises the light source 10). Hence, in specific embodiments the lighting device 1000 comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade. The housing or shade comprises the item part 400. For possible embodiments of the item part 400, see also above.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

It goes without saying that one or more of the first (printable or printed) material and second (printable or printed) material may contain fillers such as glass and fibers which do not have (to have) influence on the on T_{g} or Tₘ of the material(s).

## Claims

1. A method for producing a 3D item (1) comprising a plurality of layers (322) of 3D printed material (202) by means of fused deposition modelling, the method comprising:
- layer-wise depositing 3D printable material (201), including 3D printing of a second layer (3222) on a top face (371) of a first layer (3221), to provide the 3D item (1);
- temporarily adapting one or more of (i) an extrusion rate v_{E}, (ii) a printing speed v_{P}, and (iii) a printing temperature T_{N} to provide a locally increased layer width (W1) of the second layer (3222) thereby providing a protruding layer part (1320) having a protrusion height (HI); wherein the protruding layer part (1320) is associated to the second layer (3222) and at least partly covers a side face (3231) of the first layer (3221).

2. The method according to claim 1, comprising: 3D printing layers (322) along parallel printing paths (Aₚ) to provide a stack (1322) comprising a plurality of the layers (322); wherein the method further comprises: generating along a connection line (1329) configured within the stack (1322) and configured perpendicular to the printing paths (Aₚ) of the layers (322) of the stack, one in n layers (322) of such protruding layer part (1320), wherein n≥5.

3. The method according to any one of the preceding claims, wherein the method comprises: while 3D printing the second layer (3222), (i) temporarily increasing the extrusion rate v_{E} with at least 100% and/or (ii) temporarily reducing the printing speed v_{P} with at least 50%, and/or (iii) temporarily increasing the printing temperature T_{N} with at least 20°C.

4. The method according to any one of the preceding claims, wherein the method comprises: controlling one or more of the extrusion rate v_{E}, the printing speed v_{P}, and the printing temperature T_{N}, such as to provide the second layer (3222) with the layer width (W) and the locally increased layer width (W1), a layer height (H), and the protrusion height (HI) of the protruding layer part (1320), wherein 1.25≤W1/W≤25, and wherein 1.5≤H1/H≤100.

5. The method according to claim 4, wherein the second layer (3222) comprises (i) a first part (1321) having a first length (L_{L1}) and having the layer width (W) and (ii) the protruding layer part (1320) having a second length (L_{L2}) and having the increased layer width (W1); wherein 0.0≤L_{L1}/L_{L2}≤0.95.

6. The method according to any one of the preceding claims, wherein the 3D printable material (201) is transmissive for visible light.

7. The method according to any one of the preceding claims, comprising: using different 3D printable materials (201), wherein the different 3D printable materials (201) differ in optical properties, wherein the method further comprises providing (i) the protruding layer part (1320) and the first part (1321) as defined in claim 6 using the different 3D printable materials (201), respectively.

8. The method according to any one of the preceding claims, wherein the 3D printable material (201) and the 3D printed material (202) have a glass transition temperature T_{g} selected from the range of 50-200 °C and/or a melting temperature Tₘ selected from the range of 80-250 °C; wherein a flow rate of the 3D printable material (201) is selected from the range 5-100 cm³/10 min.

9. The method according to any one of the preceding claims and according to claim 5, wherein the protruding layer part (1320) has a hairpin bend structure, and L_{L2}<L_{L1}, and wherein H1/H as defined in claim 4 is at least 2.

10. A 3D item (1) comprising 3D printed material (202), wherein the 3D item (1) comprises a plurality of layers (322) of 3D printed material (202), wherein the plurality of layers (322) comprises at least a first layer (3221) and an adjacent second layer (3222), wherein the 3D item further comprises a protruding layer part (1320) associated to the second layer (3222) and at least partly covering a side face (3231) of the first layer (3221).

11. The 3D item (1) according to claim 10, wherein the protruding layer part (1320) has a hairpin bend structure.

12. The 3D item (1) according to any one of the preceding claims 10-11, wherein the 3D item (1) comprises a stack (1322) of 3D printed layers (322) having parallel axes of elongation (Aₒ); wherein the 3D item (1) further comprises along a connection line (1329) configured within the stack (1322) and configured perpendicular to the printing paths (Aₚ) of the layers (322) of the stack, one in n layers (322) of such protruding layer parts (1320), wherein n≥5.

13. The 3D item (1) according to any one of the preceding claims 10-12, wherein the protruding layer part (1320) provides a locally increased layer width (W1) to the second layer (3222); wherein the second layer (3222) with the layer width (W) and the locally the increased layer width (W1), has a layer height (H), and a protrusion height (HI) of the protruding layer part (1320), wherein 1.25≤W1/W≤25, and wherein 1.5≤H1/H≤100; wherein the second layer (3222) comprises (i) a first part (1321) having a first length (L_{L1}) and the layer width (W) and (ii) the protruding layer part (1320) having a second length (L_{L2}) and the increased layer width (W1); wherein 0.0≤L_{L1}/L_{L2}≤0.95.

14. The 3D item (1) according to claims 10-13, wherein the protruding layer part (1320) and the first part (1321) comprise different 3D printed materials (201), respectively, wherein the different 3D printed materials (201) differ in optical properties.

15. A lighting device (1000) comprising the 3D item (1) according to any one of the preceding claims 10-14, wherein the 3D item (1) is configured as one or more of (i) at least part of a lighting device housing, (ii) at least part of a wall of a lighting chamber, and (iii) an optical element.
